# NEW EUROPEAN PATENT SPECIFICATION

(11) **EP 0 249 293 B2**
(45) Date of publication and mention of the opposition decision: **21.05.1997**
(45) Mention of the grant of the patent: 23.02.1994
(21) Application number: 87201082.2
(22) Date of filing: 05.06.1987
(51) Int. Cl.: G06F 3/033

(54) **Processor-based data and/or graphics display apparatus**
Prozessor-gesteuertes Anzeigegerät für Daten und/oder Graphik
Appareil à microprocesseur pour l'affichage de données et/ou de graphiques

(30) Priority: 10.06.1986 GB 8614106
(43) Date of publication of application: 16.12.1987
(73) Proprietor: PHILIPS ELECTRONICS UK LIMITED, Croydon CR9 3QR (GB); Philips Electronics N.V., 5621 BA Eindhoven (NL)
(72) Inventor: Clark, David George, Croydon CR9 4JA (GB)
(74) Representative: Boxall, Robin John

(56) References cited:
- GB-A- 2 166 627
- BYTE, vol. 6, no. 8, August 1981, pages 90-147, Byte Publications Inc.; L. TESLER: "The smalltalk environment"
- "Technical specifications of the MINITEL M1 terminal" PTT Télécommunications, Temporary edition, Dec. 1984.
- "UTILISATION DES TOUCHES DE FONCTION DU MINITEL" PTT Télécommunication, Printel-Paris 1/1986.

## Description

This invention relates to a digitally operable data and/or graphics display apparatus of a type for displaying on the screen of a CRT (cathode ray tube) or other display device an image which is composed of discrete pixels and is represented by a quantity of data stored in a display memory, the apparatus including processor means for selecting under user interface control the data which is to be stored in the display memory to produce any particular image.

In display apparatus of the above type, the data stored in the display memory can be in so-called "bit-map" form comprising at least one information bit in respect of each of the pixels of a displayed image. Alternatively, this stored data can be in so-called "character-based" form. For this alternative, there is stored in a character memory of the apparatus a font of standard character shapes composed of information bits and the data, representing an image for display, stored in the display memory comprises digital codes which identify selected character shapes whose information bits are used to define the pixel content for the image in discrete display areas, composed of pixel matrices, instead of defining individual pixels. When a raster scan display device is used, the data stored in the display memory is accessed repeatedly to update the displayed image in a recurrent cycle of scanning lines which may be produced with or without interlaced field scanning.

A display apparatus of the above type may be provided with a background memory containing a large amount of data from which any item can be selected for display under user control. Additionally or alternatively, the display apparatus may be adapted to establish selective connection to external data sources to obtain thereform items of data for display.

This selective access to large amounts of data gives rise to the related problems of visually informing a user by means of the display device what data is available for selective display, and of making the data selection control of the display apparatus "user friendly" so that a user can readily find and select for display any item of data which is available.

A widely used control technique is to identify the items of data which are for selection in a list, known as a menu, which is displayed on the display device. Menus may be 1-dimensional linear lists, or 2-dimensional (possibly nested) arrays of areas. The actual selection process can be effected by means of a suitable x-y position user interface device such as a mouse or a writing tablet and pen. However, a problem with traditional menus is how to present all the items for selection when there are more data choices than can be displayed simultaneously.

One known solution to this problem is to organise the menu as a tree-structured hierarchy with two or more levels. However, finding an item by navigating up and down the tree can be tedious, particularly when there are a large number of different levels.

Another known solution to this problem is to use a so-called pull-down (or pull-up) menu. This comprises a main menu of items which are permanently displayed along the top (or bottom) of the screen of the display device. When any one of these main items is selected, a sub-menu of items for that main item is displayed vertically beneath (or above it). Any item on the sub-menu can then be selected. The selected item on the main menu and also that on the sub-menu are highlighted (e.g. by luminance inversion). If a user cannot remember where a particular item to be selected is located in the menu, the whole menu can be scanned through rapidly simply by selecting each item of the main menu in turn and observing the resulting sub-menu which is displayed. Further levels of selection can be provided by means of "dialogue boxes" which are presented when an item on a sub-menu is selected.

Although the pull-down type of menu has obvious advantages over the tree-structured menu, it also suffers from the following disadvantages. The main menu of items occupies permanent space on the screen of the display device, which is undesirable particularly if the screen resolution is low and/or any display is highly data intensive, such as in a word processor mode when it is desirable to be able to use as much of the screen for text as possible. Also, each sub-menu, and also any subsequent dialogue box, is displayed at a fixed position on the screen, and cannot be invoked at a desired position, for instance, so as not in effect to conceal information displayed beneath it.

Furthermore, a relatively large amount of hand movement is required by a user when manipulating the user interface device to reach and scan the main menu and sub-menus.

Prior European patent specification 0 159 400 discloses a menu display technique which overcomes the first of the aforementioned disadvantages of having a menu occupy permanent space on the screen of a display device. This menu display technique relates to a display screen having at least one display window having lesser dimension than the display screen and displaying subject matter different from that displayed on the remainder of the screen, and involves providing a virtual menu which comprises a plurality of items which are respectively distributed about the periphery of the window and which are not displayed in normal operations. These menu items are displayed selectively under user control by moving a cursor across selected regions in the periphery of the window. The menu items are respectively associated with the peripheral regions and therefore neither of the aforementioned second and third disadvantages are overcome by this known menu display technique because the menu items are at fixed positions and movement of the cursor from one region to another to make a change in menu selection can involve extensive hand movement.

A further menu display technique is described in "The Smalltalk Environment" by Larry Tesler, BYTE Vol 6, No 8, August 1981, pp 90-147, Byte Publications Inc. In the system described, menus are called up on screen within an activated window by the operation of a menu switch separate from a select switch on a mouse. Selection from the menu is achieved by dragging the cursor to the desired option on the menu with the menu switch depressed and then releasing it. The system does not provide for sub-menus but instead has a "blank" menu option following selection of which the user is required to type in an appropriate command.

According to the present invention a digitally operable interactive display apparatus comprises
- processor means for controlling the operation of the apparatus;
- a display memory for storing picture data to be displayed on a display screen of said apparatus;
- menu generating means for generating a menu of items to be displayed on said display screen;
- a user interface device including:
   - position determining means which are operable to generate address signals for addressing respective locations in said display memory which locations correspond to respective positions indicated by a user on said display screen, and to identify visually on the display screen by means of a movable pointer said respective positions as signified by said address signals;
   - selection means for selecting data which is to be stored in the display memory;
- a menu switch coupled with said position determining means and said menu generating means, for generating upon activation a control signal under control of which said menu generating means is enabled to load said menu into said display memory at a location being addressed by said address signals and corresponding to the position currently being indicated by said position determining means ;
wherein said user interface device is further operable for identifying any item of the displayed menu by means of said pointer;
characterised in that said selection means includes a select switch which generates upon activation a further control signal under control of which said menu generating means is enabled to generate a sub-menu appertaining to said identified item and to cause said sub-menu to be entered into the display memory for display on the display screen at a position adjacent to said identified item of the displayed menu.

The displayed menu may be termed a "pop-out" menu, because until invoked by the menu switch it does not appear on the display screen. Conveniently, the menu is subsequently removed from the display screen by the processor means in response to a subsequent operation of the menu switch.

In carrying the invention into effect, the menu switch is preferably located either on a hand-manipulated part of the user interface device, or very close to it, so that it can be operated with maximum ease, preferably by the same hand that is manipulating the user interface device. For example, it can be a second button actuated switch on a mouse or a sideswitch on a pen.

It is to be appreciated that the menu switch is additional to a select switch which conventionally is also provided on a user interface device for "point and select" operations such as are used with pull-down menus.

In further considering the nature of the invention, reference will now be made by way of example to the accompanying drawings, of which:
Figure 1 shows a block diagram which represents various logic and functional elements of a processor-controlled data and/or play apparatus in which the present invention can be embodied;
Figures 2 to 5 illustrate respective menu displays; and
Figure 6 shows a flow chart which illustrates the menu selection program.

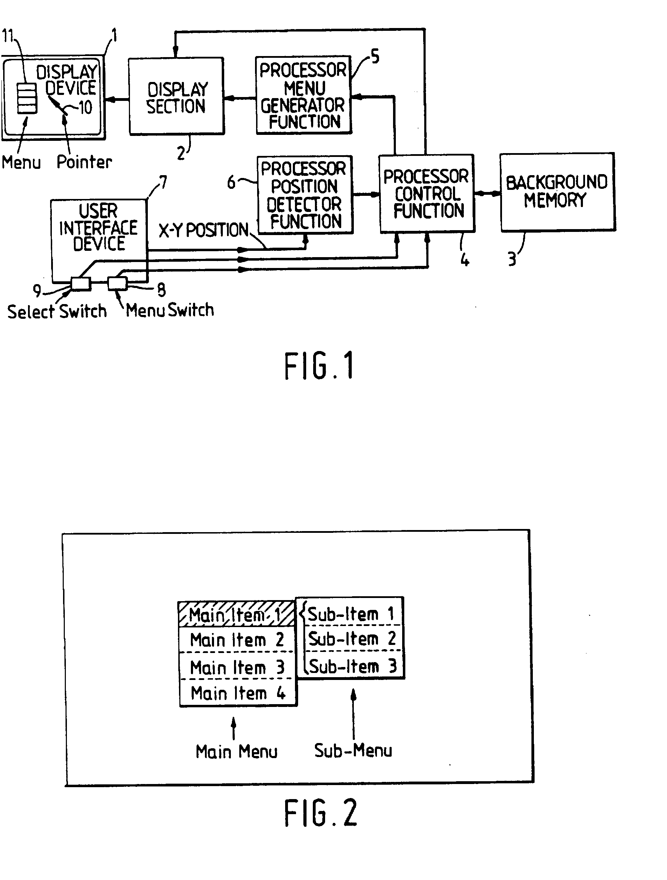

Referring to the drawings, the display apparatus is shown in Figure 1 as having, a display device 1 which is suitably a CRT monitor. The display device 1 receives video signals from a display section 2 which is assumed to include a display memory and a video signal generator in which digital-to-analogue conversion of digital data stored in the display memory is carried out to produce the video signals for driving the display device 1. The display memory is filled with data from a background memory 3 as selected by a processor control function 4. The processor is also shown as having a menu generator function 5 and a position detector function 6.

User control of the display apparatus is by means of an x-y position user interface device 7 which is, for example, a mouse or a writing tablet and pen. This interface device 7 is operable to generate x, y signals which represent any selected position on the screen of the display device 1. These x, y signals are detected by the position detector function 6 and passed to the control function 4 which is responsive to cause the display section 2 to display on the screen of the display device 1 a pointer 10 which identifies the selected position on the display. The user interface device 7 has a menu switch 8 and a select switch 9. When the menu switch 8 is operated, it produces a "menu-display" command signal to which the control function 4 is responsive to cause the menu generator function 5 to be performed. This results in menu data being entered into the display memory of the display section 2 for displaying the menu 11 on the screen of the display device 1 at the position identified by the pointer 10.

Once the menu is displayed, the individual items listed thereon can be selected by the pointer 10 and then expanded into sub-menus by actuation of the select switch 9.

The following describes one possible menu implementation in accordance with the invention. Variations are of course possible, though the implementation described is believed to be fairly optimal. The pop-out menu consists of a main menu displayed vertically, with a sub-menu displayed beside it (to the right of the main menu), also vertically. This display is illustrated in Figure 2. As mentioned above, the pop-out menu is invoked by activating the menu switch 8, which is reserved for that purpose. The only other use of this switch is to remove the menu when a user has finished with it.

The menu switch 8 should be positioned either on the x-y position device 7, or very close to it, so that it can be operated with maximum ease, preferably by the hand manipulating the device. For example, it can be a second button on a mouse or a sideswitch on a pen. However, it is distinguished from the select switch 9. The pop-out menu 11 is displayed at the position of the pointer 10 when invoked, or as close to that position as possible while retaining the menu entirely on the screen. It is positioned so that the pointer 10 is as close as possible to the menu item that is most likely to be selected - typically this would be designed to be the first item in the list. To reposition the pop-out menu 11, it is only necessary to point to the new position and press the menu switch 8 twice. This will cause the menu to be erased and then redisplayed in the new position.

Any dialogue box resulting from sub-menu selection is displayed at the position of the pop-out menu. This allows the box to be positioned where the user requires, without hiding other information. This is particularly useful if the dialogue box allows pointing to other items on the screen as part of its dialogue process. The pop-out menu thus takes up no permanent space on the screen, but is only there when required. Although one more switch operation is required than for the pull-down menu, far less hand movement is needed. The menu is positioned at the current pointer position, activation of the menu switch replacing movement of the pointer to the top of the screen. In addition the menu is more compact and so less movement is needed within the menu itself.

The basic menu selection is a two stage 'point and select' process. The desired category of commands is selected from the main menu, resulting in the highlighting of the main menu item chosen, and the display of its associated sub-menu. The command itself is then selected from the sub-menu. Before selecting from the sub-menu, the user may change his mind and select a new item from the main menu, repeating this process until he has the sub-menu he requires. When the main menu is invoked, one of the main menu items is 'preselected' and highlighted accordingly, and the corresponding sub-menu is displayed. The pre-selected item is the one most likely to be selected (e.g. the first in the list as shown in Figure 2). Preselection allows the most used commands to be chosen with a single selection from the initial sub-menu. If the user is unsure in which sub-menu the command he requires is located, he may scan through them by moving the pointer 10 through the main menu items with the select switch activated (held down), and releasing this switch when the required sub-menu is found. The highlighting follows the currently selected main item. If the select switch 9 is released with the pointer 10 outside the menu 11, the main item last pointed to remains selected. Similarly, the select switch 9 may be activated with the pointer 10 in the sub-menu, and the items scanned through, with associated highlighting, before releasing over the required item. If the switch 9 is released with the pointer 10 outside the sub-menu no item is selected. Combining these two processes allows commands to be chosen in a single step if the user wishes, exactly as with a pull-down menu. The select switch 9 is activated and the main menu is scanned, then when the required sub-menu is found the pointer 10 is moved into it (horizontally, to avoid selecting a new main item), moved to the required sub-menu item and the select switch 9 is released. While in the sub-menu, the pointer 10 may be moved back to the main menu, with the select switch 9 still activated, and the main menu may be scanned again to find the required sub-menu.

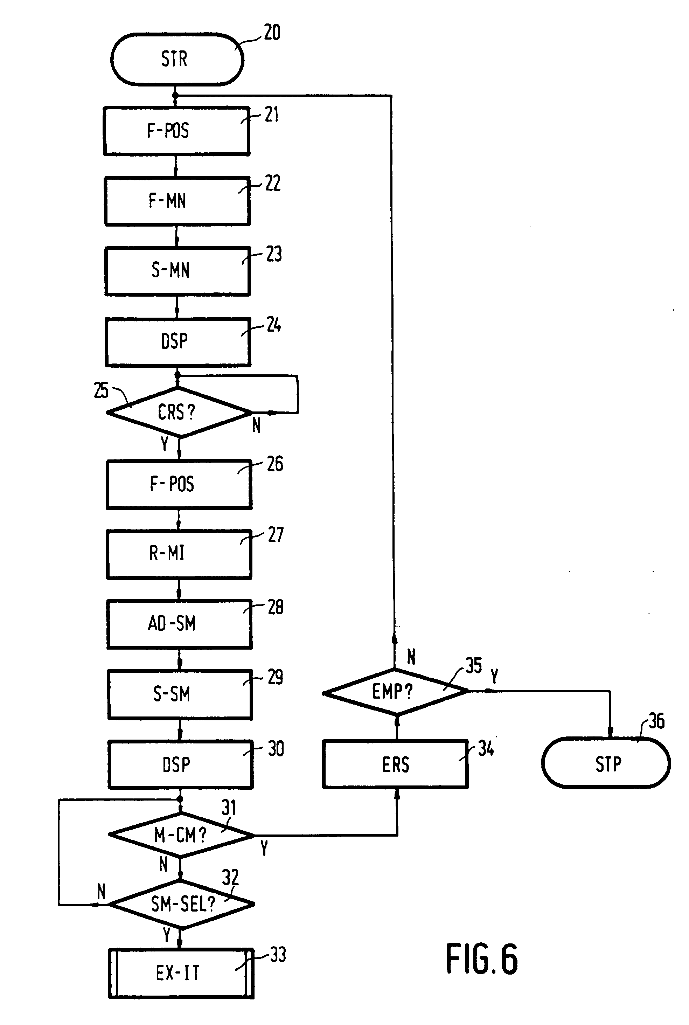

The operation of the apparatus shown in Figure 1 for the menu selection program is illustrated in the flow chart shown in Figure 6. The different program steps of the flow chart are explained below.
(20) STR:
   The program is entered into when the menu switch 8 is operated.
(21) F-POS:
   By means of the processor position detector function 6 the position XY indicated by the pointer 10 on the display device 1 is found.
(22) F-MN:
   The processor menu generator function is activated in order to generate the main menu.
(23) S-MN:
   The main menu which is generated is stored in the display memory of the display section at a location corresponding to the position XY on the display field.
(24) DSP:
   Under control of the processor 4 the content of the display memory is displayed.
(25) CRS?:
   This is a check for verifying if the pointer 10 has been removed from position XY, for example for indicating a main item at a position X'Y' in the main menu. This check is for example realised by comparing the actual coordinates x'y' of the pointer with the coordinates x, y.
(26) F-POS:
   By means of the processor position detector function 6 the new position X'Y' indicated by the pointer 10 on the display device 1 is found.
(27) R-MI:
   The main item indicated at position X'Y' is recognised.
(28) AD-SM:
   The sub-menu corresponding to the indicated main item is fetched from the background memory or generated by the processor menu generator functions.
(29) S-SM:
   The sub-menu concerned is stored in the display memory at a location corresponding to the position X'Y' the display field. 30) DSP:
   Under control of the processor 4 the content of the display memory is displayed.
(31) M-CM?
   This is a check for verifying if the menu switch 8 has been operated again in order to erase the displayed menu.
(32) SM-SEL?:
   This is a check for verifying if the select switch 9 has been activated in order to formulate the selection of a sub-item of the sub-menu.
(33) EX-IT:
   This is a sub-routine for performing the selected sub-item.
(34) ERS:
   In the case that the menu switch 8 has been operated again in step (31) the displayed menu is erased.
(35) EMP?:
   This is a check for verifying if the pointer 10 indicates a position not located within the displayed menu.
(36) STP:
   This is to exit the program.

A number of considerations related to presentation of the pop-out menu are discussed below.
- Positioning of sub-menus: A sub-menu should be positioned so that its most used items are as close as possible to its corresponding main menu item, for minimum pointer movement. If items are ordered with the most likely ones at the top, the top of a sub-menu should be in line with its parent main menu item. It may be necessary to deviate from this ideal position to keep the sub-menu entirely on the screen. Alternatively, the main menu position can be restricted such that all sub-menus can be displayed on the screen in their ideal positions.
- Differentiation of sub-menus from main menu: In order to make it clear which is the main menu and which is the sub-menu, some visual indication should be given that the sub-menu is derived from the currently selected item in the main menu. However, it should still be clear that the user may select from either menu. The indication may be (e.g.) in the form of a bracket (see Figure 2).
- Delinearation and grouping of items: Some indication of the limits of the selection area for each item should be given. Also, like items should be grouped and the group boundaries marked. This can be done by (e.g.) placing a light or dotted line between items, and a heavy or continuous line between groups.
- Highlighting of items: Currently selected items should be highlighted. This can be done (e.g.) by luminance inversion of the whole item selection area.
- Inactive items: In any system there will be contexts in which certain items on a menu are not available. Instead of removing such items from the list, it is recommended that they are marked as inactive. This may be done by (e.g.) displaying them with reduced luminance or by crossing them out.
- Indication of selection: As the menu disappears when a sub-menu item is selected, some visual verification should be given that the correct item has been selected. This may be (e.g.) to flash the item for a short time.

A pop-out menu in accordance with the invention is particularly useful where screen space is limited, either for data intensive applications or for screens of low resolution. Where there is room to put some control items permanently on the screen these should be the ones most likely to be used. Less used options should be placed in the pop-out menu.

The basic form of the pop-out menu as described so far may be extended by including other forms of selection mechanism at the second level as well as simple linear sub-menus. Some examples are described below.

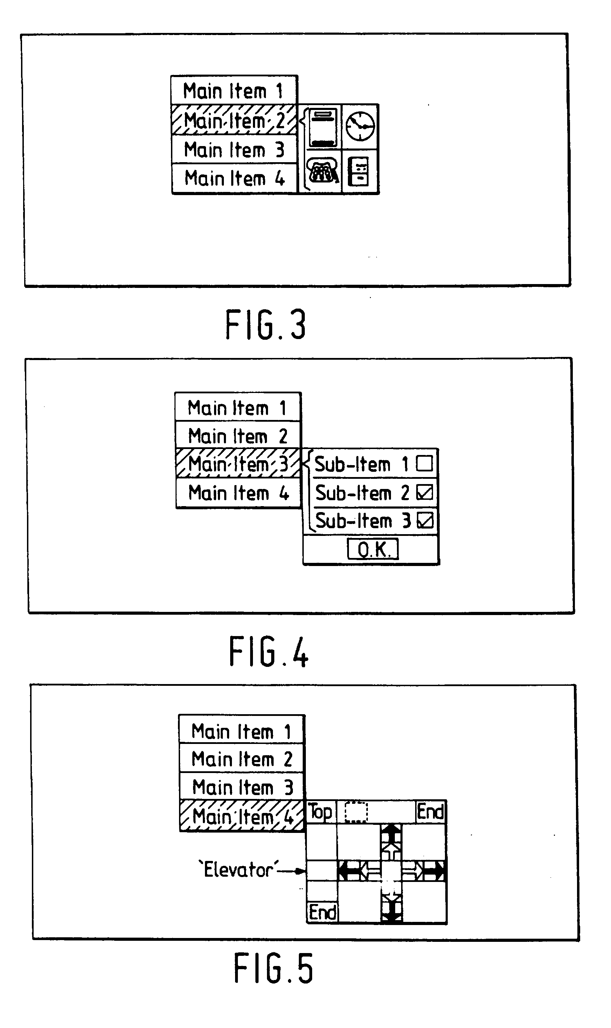

Instead of being presented as a linear list, the items in the sub-menu may be arranged in a two dimensional array as shown in Figure 3. This is particularly suitable for pictorial display of items rather than description in words. Operation of the two-dimensional sub-menu is identical to that of the linear sub-menu.

The need frequently arises to select more than one item from a sub-menu (e.g. the items may be text attributes in a word processor). This is slow if the menu has to be called up each time. The multiple-selection menu as shown in Figure 4 allows more than one item to be selected from the sub-menu. Each item may be ticked, or un-ticked if it is already ticked, and when the desired combination has been reached an 'OK button' is selected. As certain combinations of items may not be allowed, each item has associated with it a set of items which must be selected or deselected when the item itself is selected/deselected. At any stage a new sub-menu may be selected from the main menu, or the entire menu cancelled with the menu switch 8.

A common method of scrolling in a graphical control environment is by a scroll bar containing scroll arrow buttons and an 'elevator'. This is displayed permanently along the side of the screen or, in a windowing system, the active window. For two dimensional scroll two such scroll bars are displayed, one vertical and one horizontal. Such scroll bars use up permanent space on the screen, and also require much hand movement, particularly between widely spaced arrow buttons. A scroll bar can be included as a sub-menu in a pop-out menu as shown in Figure 5. The scroll bar illustrated is for two-dimensional scroll. For vertical scroll only it is much simpler. When a selection is made in the scroll bar, the main menu is removed and the scrolling action is carried out. The scroll bar remains, for further scrolling actions until it is cancelled by activating the menu switch. As the scroll bar may be on top of the area to be scrolled, it may need to be rewritten during scrolling.

It will be apparent to a person skilled in the art that the inventive principle herein defined can be readily performed, using conventional software procedures to enter menu data as required into the display memory in response to select and command signals from the user interface device. Therefore, it is considered unnecessary to burden the present disclosure with details of these software procedures by means of further high level flow charts which, in essence, would only re-iterate the narrative description already given.

## Claims

1. A digitally operable interactive display apparatus, comprising:
- processor means (4) for controlling the operation of the apparatus;
- a display memory (2) for storing picture data to be displayed on a display screen (1) of said apparatus;
- menu generating means (5) for generating a menu of items (11) to be displayed on said display screen;
- a user interface device (7) including:
- position determining means which are operable to generate address signals for addressing respective locations in said display memory which locations correspond to respective positions indicated by a user on said display screen, and to identify visually on the display screen by means of a movable pointer (10) said respective positions as signified by said address signals;
- selection means for selecting data which is to be stored in the display memory;
- a menu switch (8) coupled with said position determining means and said menu generating means for generating upon activation a control signal under control of which said menu generating means is enabled to load said menu into said display memory at a location being addressed by said address signals and corresponding to the position currently being indicated by said position determining means;
wherein said user interface device is further operable for identifying any item of the displayed menu by means of said pointer;
characterised in that said selection means includes a select switch (9) which generates upon activation a further control signal under control of which said menu generating means is enabled to generate a sub-menu appertaining to said identified item and to cause said sub-menu to be entered into the display memory for display on the display screen (1) at a position adjacent to said identified item of the displayed menu.

2. A display apparatus as claimed in Claim 1, characterised in that the menu (11) is subsequently removed from the display screen (1) in response to a subsequent operation of the menu switch (8).

3. A display apparatus as claimed in Claim 1, characterised in that said menu switch (8) and said select switch (9) are located on or adjacent a hand-manipulated part of the user interface device (7).

## Patentansprüche

1. Digital steuerbares interaktives Anzeigegerät mit:
- Prozessormitteln (4) zur Steuerung der Bedienung des Gerätes;
- einem Anzeigespeicher (2) für die Speicherung der auf dem Bildschirm (1) des genannnten Gerätes anzuzeigenden Bilddaten;
- Menüerzeugungs-Mitteln (5) für die Erzeugung eines Menüs mit Optionen (11), die auf der genannten Bildschirmfläche dargestellt werden;
- einem Benutzerschnittstellen-Gerät (7) einschließlich:
- Positionsbestimmungs-Mitteln, die betätigt werden können, um Adressensignale für die Adressierung der jeweiligen Orte in dem genannten Anzeigespeicher zu erzeugen, wobei die Orte den entsprechenden, vom Benutzer auf dem genannten Anzeigebildschirm angegebenen Positionen entsprechen, und um sichtbar auf dem Wiedergabeschirm mittels eines verlagerbaren Zeigers (10) die betreffenden Positionen wie durch die genannten Adressensignale bezeichnet, sichtbar zu identifizieren;
- Auswahl-Mitteln zur Auswahl der Daten, die in dem Anzeigespeicher gespeichert werden sollen;
- einem Menüschalter (8) der mit den genannten Positionsbestimmungs-Mitteln und den genannten Menüerzeugungs-Mitteln gekoppelt ist und der vorgesehen ist, um auf eine Aktivierung hin ein Steuersignal zu erzeugen, unter dessen Steuerung die genannte Menüerzeugungs-Mittel aktiviert werden, um das genannte Menü in den genannten Anzeigespeicher an einen Ort zu laden, der durch die genannten Adressensignale adressiert wird und der der Position entspricht, die gerade durch die genannten Positionsbestimmungs-Mittel angegeben werden;
wobei das genannte Benutzerschnittstellen-Gerät weiterhin betätigt werden kann, um eine beliebige Option des angezeigten Menüs durch den genannten Zeiger zu identifizieren,
dadurch gekennzeichnet, daß die genannten Auswahl-Mittel einen Wahlschalter (9) aufweisen, der bei Aktivierung ein weiteres Steuersignal erzeugt, durch dessen Ansteuerung die genannten Menüerzeugungs-Mittel ein Hilfsmenü erzeugen können, das der genannten identifizierten Option zugehört, und dafür sorgen können, daß dieses Hilfsmenü zur Wiedergabe am Wiedergabeschirm (1) in den Wiedergabespeicher eingeführt wird, und zwar an einer Stelle neben der identifizierten Option des wiedergegebenen Menüs.

2. Anzeigegerät nach Anspruch 1, dadurch gekennzeichnet, daß das Menü (11) anschließend in Reaktion auf eine folgende Betätigung des Menüschalters (8) vom Bildschirm (1) entfernt wird.

3. Anzeigegerät nach Anspruch 1, dadurch gekennzeichnet, daß der genannte Menüschalter (8) und der genannte Auswahlschalter (9) auf einem oder angrenzend an einen handbetätigten Teil des Benutzerschnittstellen-Gerätes (7) angeordnet sind.

## Revendications

1. Appareil d'affichage interactif à commande numérique comprenant :
- des moyens de traitement (4) pour commander le fonctionnement de l'appareil,
- une mémoire d'affichage (2) pour stocker des données d'image à afficher sur un écran d'affichage (1) dudit appareil,
- des moyens générateurs (5) de menu pour générer un menu d'articles (11) à afficher sur ledit écran d'affichage,
- un dispositif d'interface utilisateur (7) comprenant :
- des moyens de détermination de position qui peuvent être mis en oeuvre pour produire des signaux d'adressage afin d'adresser des emplacements respectifs dans ladite mémoire d'affichage, lesdits emplacements correspondant à des positions respectives indiquées par un utilisateur sur ledit écran d'affichage, et d'identifier visuellement lesdites positions comme signifiées par lesdits signaux d'adresse sur l'écran d'affichage à l'aide d'un pointeur mobile (10),
- des moyens de sélection pour sélectionner les données qui doivent être stockées dans la mémoire d'affichage,
- un commutateur de menu (8) qui est couplé auxdits moyens de détermination de position et auxdits moyens générateurs de menu et qui est prévu pour produire, lorsqu'il est activé, un signal de commande sous l'action duquel lesdits moyens générateurs de menu sont autorisés à charger ledit menu dans ladite mémoire d'affichage à un emplacement adressé par lesdits signaux d'adressage et correspondant à la position qui est couramment indiquée par lesdits moyens de détermination de position;
ledit dispositif d'interface utilisateur étant en outre utilisable pour identifier tout détail de menu affiché à l;aide dudit pointeur; caracterisé en ce que lesdits moyens de sélection comprennent un sélecteur (9) qui engendre, par activation, un autre signal de commande sous l'effet duquel lesdits moyens générateurs du menu peuvent engendrer un sous-menu appartenant audit détail identifié et provoquer l'entrée dudit sous-menu dans la mémoire d'affichage pour l'affichage sur l'écran d'affichage (1) dans une position voisine dudit détail identifié du menu affiché.

2. Dispositif d'affichage selon la revendication 1, caractérisé en ce que le menu (11) est ultérieurement éliminé de l'écran d'affichage (1) par les moyens de traitement en réponse à un actionnement ultérieur du commutateur de menu (8).

3. Appareil d'affichage selon la revendication 1, caractérisé en ce que ledit commutateur de menu (8) et ledit sélecteur (9) sont disposés sur une partie manipulée du dispositif d'interface utilisateur (7) ou à proximité de celle-ci.
